# EUROPEAN PATENT SPECIFICATION

(11) **EP 4 068 847 B1**
(45) Date of publication and mention of the grant of the patent: **09.12.2026**
(21) Application number: 21305412.5
(22) Date of filing: 31.03.2021
(51) Int. Cl.: H04W 28/16, H04L 45/12

(54) **METHOD FOR LEARNING QOS PERFORMANCE INTER-DEPENDENCE OF DIFFERENT LINKS WHICH INTERFACE WITH A COMMON APPLICATION APPLYING A JOINT FIGURE OF MERIT**
VERFAHREN ZUM LERNEN DER GEGENSEITIGEN ABHÄNGIGKEIT DER QOS-LEISTUNG VON VERSCHIEDENEN VERBINDUNGEN, DIE MIT EINER GEMEINSAMEN APPLIKATION MIT ANWENDUNG EINER GEMEINSAMEN GÜTEZAHL VERKNÜPFT SIND
PROCÉDÉ D'APPRENTISSAGE D'INTERDÉPENDANCE DE PERFORMANCE QOS DE DIFFÉRENTES LIAISONS D'INTERFACE AVEC UN JOINT D'APPLICATION COMMUN POUR APPLIQUER UN FACTEUR DE MÉRITE COMMUN

(43) Date of publication of application: 05.10.2022
(73) Proprietor: Mitsubishi Electric R&D Centre Europe B.V., 1119 NS Schiphol Rijk Amsterdam (NL); Mitsubishi Electric Corporation, Tokyo 100-8310 (JP)
(72) Inventor: LI, Qianrui, 35708 Rennes Cédex 7 (FR); BONNEVILLE, Hervé, 35708 Rennnes Cedex 7 (FR); GRESSET, Nicolas, 35708 Rennes (FR); CHARAF, Akl, 35700 Rennes (FR)
(74) Representative: Plasseraud IP

(56) References cited:
- US-A1- 2005 083 848
- US-A1- 2005 254 428
- US-A1- 2008 101 227

## Description

### FIELD OF INVENTION

The present invention relates to quality of service (QoS) management of network services, especially to a method for learning QoS performance inter-dependence of different links which interface with a common application applying a joint figure of merit as well as a method for optimizing application performance with QoS performance inter-dependency.

### BACKGROUND

Modern wireless networks, such as 5G, are widely used for its capacity of creating ecosystem for technical and business innovation involving vertical markets. For instance, when using 5G to empower verticals, professional applications have specific requirements in terms of Quality of Service (QoS). Taking a 5G-based railway communication network for example, when railway applications are carried over 5G public broadband networks, similar levels of safety, resilience and reliability must be guaranteed as in the railway dedicated communication networks.

For instance, in 5G, the concept of QoS is based on flows. QoS Flow is the finest granularity of QoS differentiation in a PDU session (a logical connection between a UE and a data network). Each QoS flow is uniquely identified by a QoS Flow ID (QFI), along with the following parameters: 5G QoS Identifier (5QI), which comprises the resource type (Guaranteed Bit Rate (GBR), non-GBR, delay critical GBR), priority level, the packet delay budget (PDB) and the packet error rate (PER), the Allocation Retention Priority (ARP) and optionally the Guaranteed and Max Flow Bitrate. The network treats packets based on their 5QI tags.

A user (UE) may establish several PDU sessions with different data networks; however a given PDU session consists in a single IP tunnel (N3 GTP-U tunnel) between a user plane function named UPF (User Plane Function) and the gNB for the core network trunk, and one or several Data Radio Bearers (DRBs) between the gNB and the UE. It is known, in 5G, QoS Flow mapping happens two times in downlink direction. The first QoS Flow mapping, made by the UPF, is to map QoS flows from the peer entity(ies) to N3 GTP-U tunnel and to tag the flows with a 5QI. Each QoS flow on N3 is mapped to a single GTP-U tunnel. The second QoS mapping is made by the gNB to map QoS flows to DRBs. In 5G, there is a one-to-many relationship between the GTP-U tunnel on N3 and the DRBs on the air interface. The gNB may map individual QoS flows to one more DRBs in the (R)AN ((Radio) Access Network). Hence, a DRB may transport one or more QoS flows. The core network manages QoS flows from the peer entities independently and the access network also manages radio bearers in an independent manner.

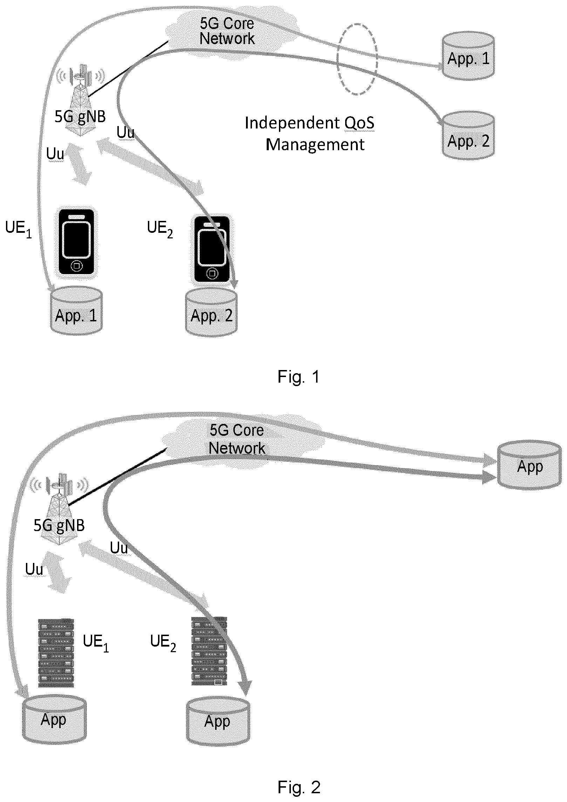

In a conventional wireless communication system, a central node (e.g. a BS) manages the different UEs' link performance from radio point of view, and has no view on the application level. Hence, the communication system generally assumes that the UEs' applications are independent. This is generally true for cellular users and applications in the eMBB services. Indeed, in a conventional case, the communication system is not aware that the UEs could be dependent from the application point of view. Also, an application has usually no clue to understand that the link performance from different UEs may be inter-dependent, while in practice in a radio access network, radio resources are shared, i.e. one user performance depends on other users. As shown in Figure 1, users UE1 and UE2 respectively use independent applications, APP1 and APP2, and the center node, 5G gNB, manages the different UEs' link independently without considering the relationship or dependency between the applications. US 2005/0254428 A1, published on 17 November 2005, relates to path diversity for the transmission of real-time information and discloses collecting QoS data for different paths and determining correlation statistics from pairs of QoS measurements. US 2008/0101227 A1, published on 1 May 2008, relates to the detection of correlation between quality changes of communication links sharing common bottleneck portions.

However, for certain wireless networks, such as in 5G enabled verticals, professional applications could be carried over 5G public MNO networks. A common application layer dedicated to the professional application is usually deployed. Performances of different wireless links shall be aggregated to jointly fulfil some requirements defined in the professional application. In this case, the inventors have found that the QoS management between different links are inter-dependent and knowing such inter-dependence between different links can be beneficial. This allows the system to provide better QoS management for the professional application due to the fact that the competitive aspect between users can be converted to a cooperative one and some further optimizations of a predefined figure of merit for the professional application can be performed. Such a situation is shown in Figure 2, wherein UE1 and UE2 use a common application, APP, and the center node, 5G gNB, manages the different UEs' links considering the relationship or dependency between links based on the same application.

The invention aims to use such a finding and improve QoS management in the conventional manner where, in the art, the dependency between the applications has not been yet taken into account.

### SUMMARY

The invention is defined by the independent claims.

### BRIEF DESCRIPTION OF THE DRAWINGS

Other features and advantages of the present invention will appear in the description hereinafter, in reference to the appended drawings, where:
Figure 1 illustrates independent QoS management for UEs with distinct applications in the art.
Figure 2 illustrates dependent QoS management for UEs with the same applications according to the present invention.
Figure 3 is a flowchart of an illustrative method of learning QoS independence between different links according to the invention.
Figure 4 shows throughput interdependency between links *lᵢ* and *lⱼ* for best effort traffic obtained by the method of learning QoS independence between different links according to the invention.
Figure 5 shows QoS profile interdependency between links *lᵢ* and *lⱼ* for GBR traffic obtained by the method of learning QoS independence between different links according to the invention.
Figure 6 shows QoS profile interdependency between link links *lᵢ* and *lⱼ* for GBR traffic with AQP obtained by the method of learning QoS independence between different links according to the invention.
Figure 7 illustrates a first exemplary embodiment of enhancing application performance with QoS performance inter-dependency.
Figure 8 illustrates a second exemplary embodiment of enhancing application performance with QoS performance inter-dependency.

### DESCRIPTION OF EMBODIMENTS

Figure 2 shows an exemplary setting of a network, such as a 5G network, in which the present invention is implemented, wherein users UE1 and UE2 use a common application App, such as a professional application of surveillance video communication for train or video streams application, and a center node, such as a 5G gNB, manages the different UEs' wireless links Uu which interference with the common application App applying a joint figure of merit via a 5G core network.

In particular, in the 5G network as shown in Figure 2, at least two users UE1 and UE2 share a common resource, and the central node gNB establishes an individual, i.e. one to one, line with each of the users. From users' perspective, users UE1 and UE2 may be unknown to each other even when they are serving a common application or service. A user does not know the impact of his behavior and his traffic on other users' performance. It should be noted that the established links are interdependent, and they can respectively belong to different user or one single user.

The inventors have found that the deployment of an application layer common for several users makes it possible to learn the interdependence between the users' flows.

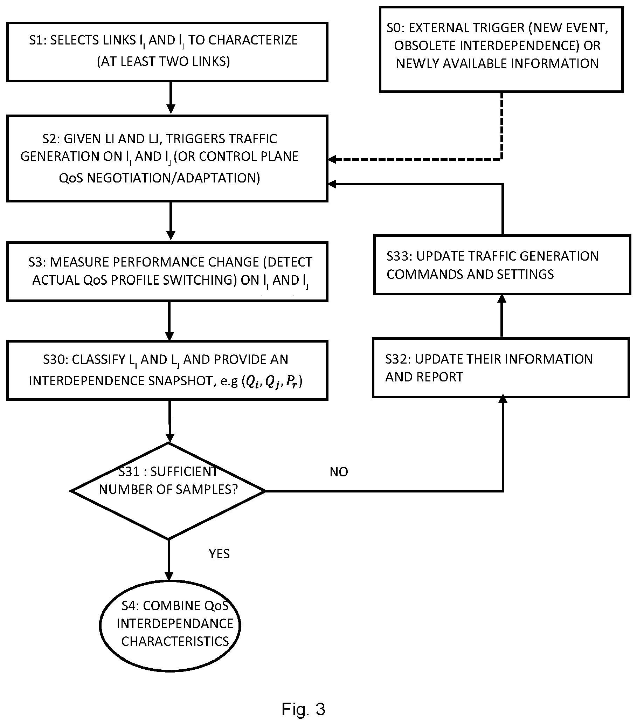

In order to learn the QoS performance inter-dependence of these wireless links, an exemplary method is now described by reference to Figure 3.

Figure 3 is a flow chart showing the steps of the exemplary method for learning QoS performance inter-dependence between different links.

As an example, in a first step S1, two links *lᵢ* and *lⱼ* are selected to be characterized, wherein according to the present invention, the number of links is not limited to two.

Once the links are selected, in a next step S2, training requests are generated for each selected link *lᵢ* and*lⱼ*. The training requests relate to user performance which depends on, for example, allocated resources, radio conditions and user position relative to the central node and also depends on other user traffic, radio conditions and allocated resources.

For instance, in step S2, for given links *lᵢ* and *lⱼ*, the training request can be generated by triggering traffic generation on links *lᵢ* and *lⱼ* or control plane QoS negotiation/adaptation, which will be discussed in detail later.

Afterwards, QoS performance on each selected link, i.e. the performance change is measure in response to the training request, is measured in step S3, in particular, actual QoS profile switching is detected on each link *lᵢ* or *lⱼ*.

Alternatively, when the QoS performance is measured, it is possible to classify the links *lᵢ* and *lⱼ* and provides an interdependence snapshot in step S30 and then judge if the number of samples are sufficient (S31). If the number is not sufficient, it is possible to update the information of the links and report the same in step S32, and the update traffic generation commands and settings, if any, so as to trigger new training request and measure the performance change, until the number of samples are sufficient. Skilled person, based on the different training requests, has no difficulty to understand and determine whether the number of samples is sufficient or not, as long as the number is sufficient to obtain the inter-dependence between the links.

Once the measurements are finished, in step S4, the measured QoS performance the selected links *lᵢ* and *lⱼ* are combined, such as by interlinking, so as to obtain the QoS performance inter-dependence between the selected links.

As mentioned, it is possible to generate training requests in different manners, which also means the performance inter-dependence between different links can be learned in different ways. For the purpose of examples, three different cases are now discussed.

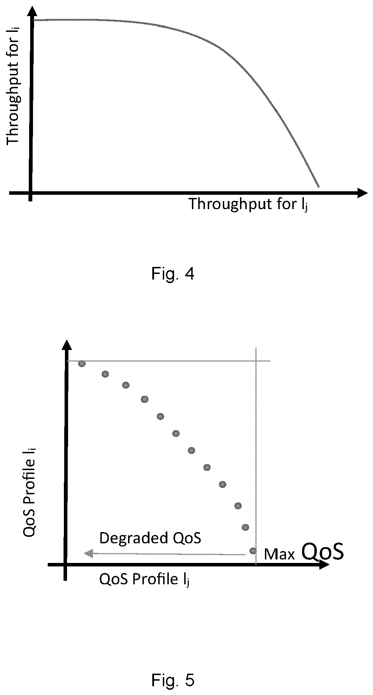

In a first case, learning link interdependence can be achieved by generating dummy traffic on link *lᵢ* to the network using a set of different QoS parameters (e.g., priority level, PDB, PER, throughout) and measure performance change (enhancement or degradation) on *lᵢ* and vice-versa. Link conditions (radio conditions, position, resources) are reported together with the generated traffic and the measured performance so that the latter can be the learning features. A detailed example of QoS inter-dependency for best effort traffic shown as the throughput interdependency between link *lᵢ* and *lⱼ* is illustrated in Figure 4, wherein the throughout for links *lᵢ* and *lⱼ* for best effort traffic is interlinked to obtain their inter-dependency.

Alternatively, it is also possible to generate real traffic pertaining to said common application on links *lᵢ* and *lⱼ* and to measure the performance change in response to the real traffic.

In this case, real or dummy data flows are transmitted through the data flow pipe opened and the radio access network (RAN) can measure the flow performance and feedback the QoS that can be established for this data flow to the application server.

In a second case, learning link interdependence can also be achieved taking QoS as a key metric. Mainly and through an existing system procedure, such as control plane procedures such as QoS negotiation, a QoS profile *Qᵢ* is requested on *lᵢ* and *Qⱼ* is requested on *lⱼ.*

By iterating simultaneously on different levels of *Qᵢ* and *Qⱼ,* the common application layer can establish the relationship between the two links in given conditions. The acceptance and rejection of each QoS profile request is acquired at the application server side via central node, such as gNB. There is no need to generate real traffic as QoS profiles are well known for both the network and the common application layer. An example of QoS inter-dependency for GBR traffic shown as the QoS profile interdependency between link *lᵢ* and *lⱼ* is illustrated in Figure 5, wherein QoS profiles for links *lᵢ* and *lⱼ* for GBR traffic are interlinked.

Moreover, it shall be noted that during control plane procedure the application layer (either the application layer at the user node or the application server resides in the data network, depending on uplink or downlink traffic) will try to open a data flow with QoS parameters, the radio access network (RAN) will accept or reject the data flow according to RAN level information (such as the propagation channel condition of selected link (*lᵢ, lⱼ*), the current load of the system, etc) . The control plane procedure refers to the procedure in control plane of application layer trying to open the data flow and how the RAN will response to the establishment of the data flow.

In a third case, learning link interdependence can also be achieved through Alternative QoS Profiles (AQP).

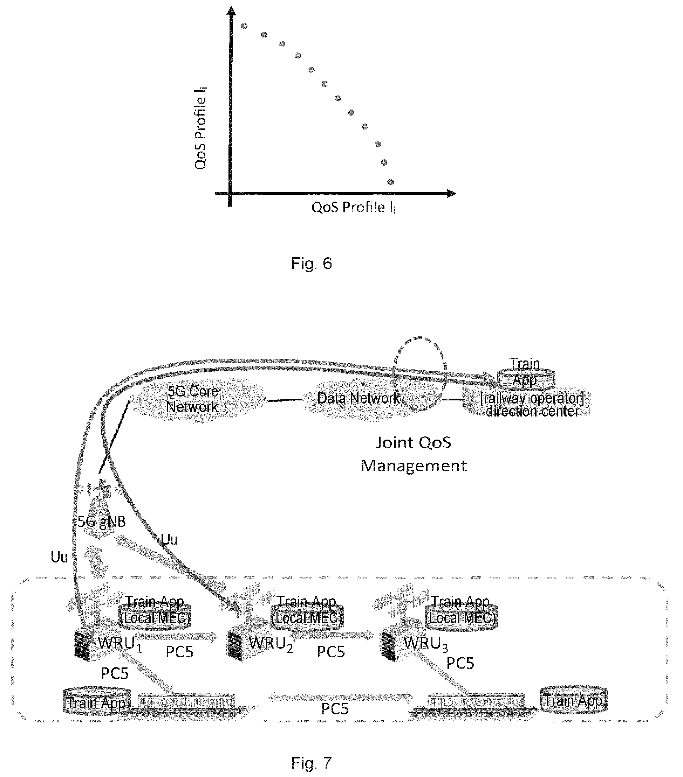

For GBR QoS flows, application can ask user terminals to request target (preferred) QoS profiles and a list of fall back QoS parameters (e.g., PDB, PER, GFBR) on links *lᵢ* and *lⱼ* that the application is able to adapt to. Here it is the network (the base station) that determines which QoS profile is possible for each flow depending on traffic, radio conditions, base station load..., and the application (or the terminal) is warned about the current QoS profiles in use. Real or dummy traffic could be injected. Knowing the traffic injected and the current QoS profile reported for several users, the application server can learn the joint behaviour of the communication system. An example of QoS inter-dependency for GBR traffic with AQP shown as the QoS profile interdependency between link *lᵢ* and *lⱼ* is illustrated in Figure 6.

In addition, for GBR QoS flow, regardless of whether it is based on QoS profile or AQP, the control plane procedure is pure signaling message (no data plane transmission): application layer will try to open the data flow by sending request(s) with QoS parameters which characterizes the flow, and the RAN will response with an acknowledgement.

Moreover, the case of traffic adaptation with GBR or latency constrained services through QoS request, the RAN will only acknowledge with a yes or not: the QoS flow is either accepted or rejected. For the case of traffic adaptation with GBR or latency constrained services through AQP, QoS request includes target (MAX) QoS profile and a list of fallback QoS modes, the RAN acknowledgement will inform the application server the QoS parameter that he is able to adapt.

Preferably, the above exemplary learning method may also take into account the different conditions and configurations in which the samples were obtained. Therefore, the obtained QoS performance inter-dependency between links can be conditioned on different configurations or can be presented as a multi-dimensional data base.

For example, due to the fact that the radio link conditions can vary due to channel fluctuation. In order to take into account such fluctuation, during the QoS inter-dependency learning procedure, it is possible to categorize the channel condition into low/medium/high SNR scenario and obtain the QoS inter-dependency for each scenario. Another possibility is to present the learned QoS inter-dependency as the QoS inter-dependence metric combined with a probability measure (e.g., (*Qᵢ, Qⱼ, Pᵣ*))*,* such as the step S31, which takes into account the channel variation. In other words, when profile *Qᵢ* is requested on link *lᵢ*, *Qⱼ* is likely to be achievable on *lᵢ* with a probability of *Pᵣ*.

Therefore, the QoS interdependency relation learned can be presented as pair information presented in figure or n-tuples information stored in a database. This relation can be continuous or discrete, depending on the system configuration. It can also be conditioned on different configurations (e.g., SNR regime) or can be combined with other information (e.g., probability of acceptance) to reflect the fluctuation of the radio condition.

Preferably, learning link interdependence procedure can be triggered by external events such as obsolete interdependence (data staling) or a change in the neighbourhood, as illustrated in step S0 in Figure 3.

Once the QoS performance inter-dependence information for different links has been learned by means of the above mentioned embodiments, such information, taking the previous two-link example, can be presented in the form of achievable QoS profile sets $\left({Q}_{i}^{1}, {Q}_{j}^{1}\right) , … , \left({Q}_{i}^{N}, {Q}_{j}^{N}\right)$, wherein the profile sets can be discretized sets or a continuous relation presented in curve, i.e., infinite pairs of QoS profile set. They can be used to enhance the performance of the application by means of the following two-step procedure:
1. For each achievable QoS profile set configuration ( ${Q}_{i}^{i} , {Q}_{j}^{i}$), predict the performance of the application based on the aforementioned QoS profile. Repeat the procedure for all the achievable QoS profile sets. In case of continuous QoS interdependency function over the links, derive the application performance as a function of the QoS interdependency function, in case of QoS profile presented together with a probability measure, an expectation optimization is performed for application performance evaluation.
2. Select the QoS profile set which renders the best performance for the application.

It should be noted that in step 1, performance prediction for the application is based on a predefined figure of merit for the application, which can be, for example, the throughput, delay, reliability etc., all depends on the application. Given a pair of QoS profile, it is known that further optimization on some other configuration parameters for the application regarding the predefined figure of merit can be performed.

Below are given two exemplary examples of utilizing the QoS inter-dependency information learning to optimize application performance.

A first embodiment is the traffic adaptation and QoS management through 5G MNO as a backhaul for railway communication system. In particular, the first embodiment relates to joint QoS management and routing optimization for surveillance video delay minimization for railway communication system through 5G MNO as a backhaul.

As shown in Figure 7, the users are the Wayside Radio Unit, such as WRU₁, WRU₂, and WRU₃ in a dedicated train radio network, as shown in the dashed rectangular in Figure 7. A common application, Train App, is a railway operator related professional application which can be, for example, surveillance video communication for the train. The two Uu links between 5G gNB and WRU₁ and between 5G gNB and WRU₂ are inter-dependent, their QoS inter-dependency can be learned according to the one of the abovementioned exemplary methods for learning QoS performance inter-dependence.

One possible figure of merit for the train application can be delay minimization for the surveillance video. As is shown in Figure 7, 5G MNO is used as backhaul for the professional train application. From the 5G MNO's point of view, the WRUs are conventional users served through the Uu interfaces. However, from the eyes of local 5G train network in the dashed rectangular in Figure 7, WRUs serve as relaying or access points for the trains. Therefore, the flows that go through two Uu links can belong to the same train application, i.e. Train App., which make them inter-dependent with each other.

In this case, after the QoS inter-dependency learning, for each pair of achievable QoS profile, an optimization of the PC5 routing topology for the dedicated train radio network in dashed rectangular in Figure 7 should be performed so as to minimize the delay for the surveillance video application.

After repeating the performance prediction over each achievable QoS profile, It is possible to select the optimal QoS profile pair and the associated best PC5 routing configuration which lead to the minimal delay performance.

A second embodiment is a QoE (quality of experience) management through MNO as a backhaul for video studio. In particular, it relates to joint QoS management and codec(/routing) optimization for QoE optimization for video studio through 5G MNO as a backhaul.

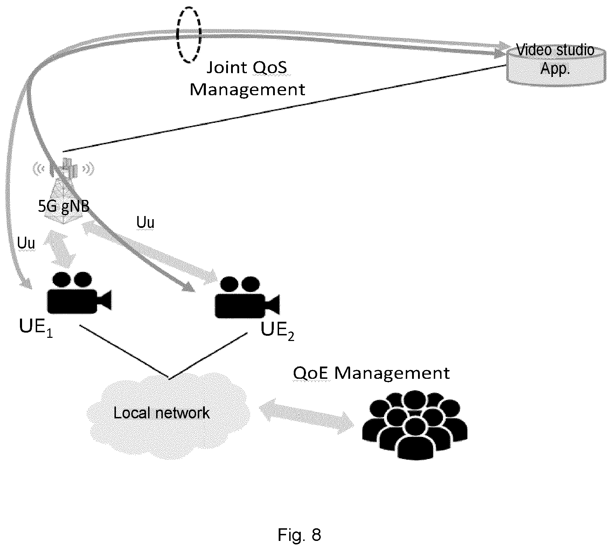

Figure 8 shows a network for providing video stream from a first camera UE₁ and a second camera UE₂ to end users who use or watch the video stream. UE₁ and UE₂ share a common video studio App. on a 5G network via 5G gBN. Therefore, two Uu links between MNO central node 5G gNB and UE₁ and between MNO central node 5G gNB and UE₂ are inter-dependent, and their QoS inter-dependency can be learned according to one of the abovementioned exemplary methods for learning QoS performance inter-dependence.

Typically, it is not necessary to request the highest quality for all video streams all the time: For example, the camera that is 'on air' would require a high video quality, although a lower quality could be acceptable for the video flows coming from the other cameras. Hence, the different video flow characteristics are linked at application level.

In this embodiment, one possible figure of merit for the video studio application can be QoE enhancement, e.g., Voice/image Quality etc. In this case, after the QoS inter-dependency learning, for each pair of achievable QoS profile, an optimization of the codecs for different users will be performed so that a target QoE metric can be achieved.

Alternatively, if a complicated local network is involved, path selection or local network routing topology optimization can also be jointly optimized for the QoE optimization. Such an optimization is known in the art.

With the abovementioned methods, the present invention proposes a method to learn the QoS inter-dependence for multiple communication links that interfaces with a common application to achieve a joint figure of merit, so as to obtain the interdependency relation between links. In addition, the present invention also proposes a method, based on the figure of merit for the application, for further enhancing the network performance by a joint optimization of the QoS of the links and some other configuration metrics, such as path selection.

Moreover, is known to those skilled in the art, the aforementioned example architectures described above, according to the present invention, can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device). Examples of a computer-readable medium include, but are not limited to, a semiconductor or solid state memory, magnetic tape, a removable computer diskette, a RAM, a read-only memory (ROM), a rigid magnetic disk, an optical disk, etc. Current examples of optical disks include compact disk-read-only memory (CD-ROM), compact disk-read/write (CD-R/W) and DVD.

The embodiments described hereinabove are illustrations of this invention. Various modifications can be made to them without leaving the scope of the invention which stems from the annexed claims.

## Claims

1. A method for optimizing application performance with QoS performance inter-dependency, comprising:
- learning QoS performance inter-dependence of a plurality of communication links in a network managed by a central node (gNB), wherein the central node (gNB) establishes the plurality of communication links between a plurality of users (UE1, UE2) in the network and a common application, and provides a shared common resource to the plurality of users, comprising:
- selecting at least two links (*lᵢ*, *lⱼ*) among the plurality of communication links;
- generating training requests respectively for each selected link (*lᵢ*, *lⱼ*);
- measuring QoS performance on each selected link (*lᵢ*, *lⱼ*) for the training requests ; and
- combining the measured QoS performance between the selected links, so as to learn the QoS performance inter-dependence between the selected links (li, lj), the learned QoS performance inter-dependence information being presented in the form of a plurality of achievable QoS profile sets for the selected links, and
wherein the method further comprises:
- for each achievable QoS profile set, predicting a performance of the common application based on the achievable QoS profile set and selecting the achievable QoS profile set which renders the best performance for the common application.

2. The method according to claim 1, wherein the step of generating training requests respectively for each selected link (*lᵢ*, *lⱼ*) includes triggers traffic generation on selected links;
wherein the step of measuring QoS performance on each selected link (*lᵢ*, *lⱼ*) for the training requests includes measuring enhancement or degradation on the selected link (li, lj).

3. The method according to claim 2, wherein the traffic is a real traffic pertaining to said common application or a dummy traffic generated according to the traffic characteristics of said common application.

4. The method according to claim 1, wherein the step of generating training requests respectively for each selected link ((*lᵢ*, *lⱼ*) includes requesting QoS profiles for each selected link through a control plane procedure;
wherein the step of measuring QoS performance on each selected link (*lᵢ*, *lⱼ*) for the training requests includes detecting QoS profiles changes on the selected links (li, lj).

5. The method according to claim 1, wherein the communication links are wireless links.

6. The method according to claim 1, wherein the step of generating training requests respectively for each selected link (*lᵢ*, *lⱼ*) includes requesting alternative QoS profiles (AQP) for each selected link through a dynamic GBR QoS profile procedure;
wherein the step of measuring QoS performance on each selected link (*lᵢ*, *lⱼ*) for the training requests includes detecting QoS profiles changes on the selected links (li, Ij).

7. The method according to claim 1, wherein it comprises defining different channel conditions, and performing the steps in claim 1 for each channel condition.

8. The method according to claim 7, wherein the channel condition includes low, medium and high SNR scenarios and the QoS performance inter-dependency is obtained for each scenario.

9. The method according to claim 1, wherein the method is triggered by external event.

10. The method according to claim 1, wherein the obtained QoS performance inter-dependence contains a set of continuous or discrete QoS profile.

11. A data processing apparatus comprising means for carrying out the steps of the method of claim 1.

## Patentansprüche

1. Verfahren zur Optimierung einer Anwendungsleistung mit QoS-Leistungsinterdependenz, umfassend:
- Erlernen einer QoS-Leistungsinterdependenz einer Mehrzahl von Kommunikationsverbindungen in einem Netzwerk, welches von einem zentralen Knoten (gNB) verwaltet wird, wobei der zentrale Knoten (gNB) die Mehrzahl von Kommunikationsverbindungen zwischen einer Mehrzahl von Nutzern (UE1, UE2) in dem Netzwerk und einer gemeinsamen Anwendung herstellt und der Mehrzahl von Nutzern eine gemeinsam genutzte Ressource bereitstellt, umfassend:
- Auswählen von wenigsten zwei Verbindungen (*lᵢ*, *lⱼ*) aus der Mehrzahl von Kommunikationsverbindungen;
- Erzeugen von Trainingsanforderungen jeweils für jede ausgewählte Verbindung (*lᵢ*, *lⱼ*);
- Messen einer QoS-Leistung an jeder ausgewählten Verbindung (*lᵢ*, *lⱼ*) für die Trainingsanforderungen; und
- Kombinieren der gemessenen QoS-Leistung zwischen den ausgewählten Verbindungen, um die QoS-Leistungsinterdependenz zwischen den ausgewählten Verbindungen (*lᵢ*, *lⱼ*) zu erlernen, wobei die erlernte QoS-Leistungsinterdependenz-Information in der Form einer Mehrzahl erreichbarer QoS-Profilsätze für die ausgewählten Verbindungen dargestellt wird,
und wobei das Verfahren ferner umfasst:
- für jeden erreichbaren QoS-Profilsatz, Vorhersagen einer Leistung der gemeinsamen Anwendung auf Grundlage des erreichbaren QoS-Profilsatzes und Auswählen des erreichbaren QoS-Profilsatzes, welche die beste Leistung für die gemeinsame Anwendung erbringt.

2. Verfahren nach Anspruch 1, wobei der Schritt eines Erzeugens von Trainingsanforderungen jeweils für jede ausgewählte Verbindung (*lᵢ*, *lⱼ*) umfasst, eine Verkehrserzeugung an ausgewählten Verbindungen auszulösen;
wobei der Schritt eines Messens der QoS-Leistung an jeder ausgewählten Verbindung (*lᵢ*, *lⱼ*) für die Trainingsanforderungen ein Messen einer Verbesserung oder Verschlechterung an der ausgewählten Verbindung (*lᵢ*, *lⱼ*) umfasst.

3. Verfahren nach Anspruch 2, wobei der Verkehr ein realer Verkehr ist, welcher die gemeinsame Anwendung oder einen Dummy-Verkehr betrifft, welcher gemäß den Verkehrscharakteristika der gemeinsamen Anwendung erzeugt wird.

4. Verfahren nach Anspruch 1, wobei der Schritt eines Erzeugens von Trainingsanforderungen jeweils für jede ausgewählte Verbindung (*lᵢ*, *lⱼ*) ein Anfordern von QoS-Profilen für jede ausgewählte Verbindung durch ein Steuerebenenverfahren umfasst;
wobei der Schritt eines Messens der QoS-Leistung an jeder ausgewählten Verbindung (*lᵢ*, *lⱼ*) für die Trainingsanforderungen ein Erfassen von QoS-Profiländerungen an den ausgewählten Verbindungen (*lᵢ*, *lⱼ*) umfasst.

5. Verfahren nach Anspruch 1, wobei die Kommunikationsverbindungen drahtlose Verbindungen sind.

6. Verfahren nach Anspruch 1, wobei der Schritt eines Erzeugens von Trainingsanforderungen jeweils für jede ausgewählte Verbindung (*lᵢ*, *lⱼ*) ein Anfordern alternativer QoS-Profile (AQP) für jede ausgewählte Verbindung durch ein dynamisches GBR-QoS-Profilverfahren umfasst;
wobei der Schritt eines Messens der QoS-Leistung an jeder ausgewählten Verbindung (*lᵢ*, *lⱼ*) für die Trainingsanforderungen ein Erfassen von QoS-Profiländerungen an den ausgewählten Verbindungen (*lᵢ*, *lⱼ*) umfasst.

7. Verfahren nach Anspruch 1, wobei es ein Definieren unterschiedlicher Kanalbedingungen und ein Ausführen der Schritte in Anspruch 1 für jede Kanalbedingung umfasst.

8. Verfahren nach Anspruch 7, wobei die Kanalbedingung Szenarien mit niedrigem, mittlerem und hohem SNR umfasst und die QoS-Leistungsinterdependenz für jedes Szenario erhalten wird.

9. Verfahren nach Anspruch 1, wobei das Verfahren durch ein externes Ereignis ausgelöst wird.

10. Verfahren nach Anspruch 1, wobei die erhaltene QoS-Leistungsinterdependenz einen Satz kontinuierlicher oder diskreter QoS-Profile enthält.

11. Datenverarbeitungsvorrichtung, welche Mittel zum Ausführen der Schritte des Verfahrens nach Anspruch 1 umfasst.

## Revendications

1. Procédé d'optimisation de performances d'application avec interdépendance de performances QoS, comprenant :
- l'apprentissage de l'interdépendance de performances QoS d'une pluralité de liaisons de communication dans un réseau géré par un nœud central (gNB), dans lequel le nœud central (gNB) établit la pluralité de liaisons de communication entre une pluralité d'utilisateurs (UE1, UE2) dans le réseau et une application commune, et fournit une ressource commune partagée à la pluralité d'utilisateurs, comprenant :
- la sélection d'au moins deux liaisons (l*ᵢ*, l*ⱼ*) parmi la pluralité de liaisons de communication ;
- la génération de requêtes d'entraînement respectivement pour chaque liaison sélectionnée (l*ᵢ*, l*ⱼ*) ;
- la mesure de la performance QoS sur chaque liaison sélectionnée (l*ᵢ*, l*ⱼ*) pour les requêtes d'entraînement ; et
- la combinaison des performances de QoS mesurées entre les liaisons sélectionnées, de manière à apprendre l'interdépendance de performances QoS entre les liaisons sélectionnées (li, lj), les informations d'interdépendance de performances QoS apprises étant présentées sous la forme d'une pluralité d'ensembles de profils QoS atteignables pour les liaisons sélectionnées, et dans lequel le procédé comprend en outre :
- pour chaque ensemble de profils QoS atteignables, la prédiction d'une performance de l'application commune sur la base de l'ensemble de profils QoS atteignables et la sélection de l'ensemble de profils QoS atteignables qui rend la meilleure performance pour l'application commune.

2. Procédé selon la revendication 1, dans lequel l'étape de génération de requêtes d'entraînement respectivement pour chaque liaison sélectionnée (l*ᵢ*, l*ⱼ*) inclut une génération de trafic de déclenchements sur des liaisons sélectionnées ;
dans lequel l'étape de mesure de la performance QoS sur chaque liaison sélectionnée (l*ᵢ*, l*ⱼ*) pour les requêtes d'entraînement inclut la mesure d'une amélioration ou d'une dégradation sur la liaison sélectionnée (li, lj).

3. Procédé selon la revendication 2, dans lequel le trafic est un trafic réel appartenant à ladite application commune ou un trafic factice généré selon les caractéristiques de trafic de ladite application commune.

4. Procédé selon la revendication 1, dans lequel l'étape de génération de requêtes d'entraînement respectivement pour chaque liaison sélectionnée ((l*ᵢ*, l*ⱼ* ) inclut la requête de profils QoS pour chaque liaison sélectionnée par le biais d'une procédure de plan de contrôle ;
dans lequel l'étape de mesure de la performance QoS sur chaque liaison sélectionnée ( l*ᵢ*, l*ⱼ* ) pour les requêtes d'entraînement inclut la détection de changements de profils QoS sur les liaisons sélectionnées (li, lj ).

5. Procédé selon la revendication 1, dans lequel les liaisons de communication sont des liaisons sans fil.

6. Procédé selon la revendication 1, dans lequel l'étape de génération de requêtes d'entraînement respectivement pour chaque liaison sélectionnée ( l*ᵢ*, l*ⱼ* ) inclut la requête de profils de QoS alternatifs (AQP) pour chaque liaison sélectionnée par le biais d'une procédure de profil de QoS GBR dynamique ;
dans lequel l'étape de mesure de la performance QoS sur chaque liaison sélectionnée ( l*ᵢ*, l*ⱼ* ) pour les requêtes d'entraînement inclut la détection de changements de profils QoS sur les liaisons sélectionnées (li, lj ).

7. Procédé selon la revendication 1, dans lequel il comprend la définition de différentes conditions de canal, et la réalisation des étapes de la revendication 1 pour chaque condition de canal.

8. Procédé selon la revendication 7, dans lequel la condition de canal inclut des scénarios SNR bas, moyen et élevé et l'interdépendance de performances QoS est obtenue pour chaque scénario.

9. Procédé selon la revendication 1, dans lequel le procédé est déclenché par un événement externe.

10. Procédé selon la revendication 1, dans lequel l'interdépendance de performances QoS obtenue contient un ensemble de profils QoS continus ou discrets.

11. Appareil de traitement de données comprenant des moyens pour réaliser les étapes du procédé selon la revendication 1.
